# EUROPEAN PATENT APPLICATION

(11) **EP 3 148 188 A1**
(43) Date of publication of application: **29.03.2017**
(21) Application number: 15186722.3
(22) Date of filing: 24.09.2015
(51) Int. Cl.: H04N 13/02, B64D 11/00, H04N 13/04, H04N 5/232

(54) **VIRTUAL WINDOWS FOR AIRBORNE VERHICLES**

(71) Applicant: Airbus Operations GmbH, 21129 Hamburg (DE)
(72) Inventor: Riedel, Christian, 21129 Hamburg (DE)
(74) Representative: Isarpatent

(57) **Abstract**

A virtual window assembly for an airborne vehicle includes at least two cameras, each configured to capture a panoramic and time-resolved image data stream from the view to the outside of the airborne, at least one image data processor coupled to the at least two cameras and configured to receive the captured image data streams from the at least two cameras and to interleave the received image data streams to obtain an automultiscopic image data stream corresponding to different viewing angles of the at least two cameras, and at least one automultiscopic electronic display mounted to an inside of a hull of the airborne vehicle, coupled to the image data processor and configured to display the automultiscopic image data stream.

## Description

The present invention relates to a virtualization of windows for airborne vehicles, specifically by gathering image and/or video data in the surrounding of an airborne vehicle and displaying the gathered image and/or video data on electronic displays within the airborne vehicle.

The design of small aircraft windows that is constrained by engineering considerations allows passenger of an aircraft only a limited view on the outside world. However, implementing windows in aircraft increases weight, drag, manufacturing costs and maintenance efforts for the aircraft. Thus, there is a conflict between engineering boundary conditions and the desire for a higher comfort of the passenger.

Several attempts have been made to improve this situation. For example, document US 2013/0169807 A1 discloses a virtual window including internal and the external aspects of a real window, with the internal part having a folded or flexible high resolution colour display that conforms to the internal profile of the aircraft fuselage as if it were an actual window. Document US 2004/0217976 A1 discloses methods and systems for processing images corresponding to views external to a vehicle where first and second signal receiving portions are configured to receive a signal corresponding to an image of a view external to the vehicle and a signal processing portion directs to a first display portion a first signal corresponding to the image and to a second display portion a second signal corresponding to the image.

Document US 2003/0076279 A1 discloses a stereoscopic display system with a processor parsing a left eye image of a stereoscopic image into a plurality of vertical left eye strips and a right eye image of the stereoscopic image into a plurality of vertical right eye strips and subsequently interleaving the left and right eye strips into a display image to be displayed on a display device with a light-guiding lenticular layer such that a viewer can readily perceive the display image as having three-dimensions. Document DE 10 2004 027 334 A1 discloses a navigation system for motor vehicles, aircraft, ships or space vehicles which allows the display of graphical and/or textual data on an autostereoscopic display.

There is, however, a need for improved solutions that enable passengers of an airborne vehicle to enjoy a realistic panoramic view to the outside of an airborne vehicle, for example an aircraft cabin.

This need is met by a virtual window assembly having the features of claim 1, an aircraft having the features of claim 7, and a method for displaying a view of the outside of an aircraft to passengers within the aircraft having the features of claim 9.

A first aspect of the disclosure pertains to a virtual window assembly for an airborne vehicle, comprising at least two cameras, each configured to capture a panoramic and time-resolved image data stream from the view to the outside of the airborne, at least one image data processor coupled to the at least two cameras and configured to receive the captured image data streams from the at least two cameras and to interleave the received image data streams to obtain an automultiscopic image data stream corresponding to different viewing angles of the at least two cameras, and at least one automultiscopic electronic display mounted to an inside of a hull of the airborne vehicle, coupled to the image data processor and configured to display the automultiscopic image data stream.

According to a second aspect of the disclosure, an aircraft comprises a virtual window assembly according to the first aspect of the disclosure.

According to a third aspect of the disclosure, a method for displaying a view of the outside of an aircraft to passengers within the aircraft comprises capturing a panoramic and time-resolved image data stream from the view to the outside of the aircraft using at least two cameras, transmitting the captured image data streams to at least one image data processor, interleaving, by the at least one image data processor, the received image data streams to obtain an automultiscopic image data stream corresponding to different viewing angles of the at least two cameras, and displaying the automultiscopic image data stream on at least one automultiscopic electronic display mounted to an inside of a hull of the airborne vehicle.

The idea on which the present invention is based is to gather panoramic and time-resolved image data with at least two cameras from different viewing angles. The image data from the different cameras is then combined into an interleaved image data stream with multiple views. The multiple views are condensed into an automultiscopic image data stream that is displayed on an automultiscopic electronic display. Depending on the viewing angle of a passenger looking at the display, one of the multiple views is presented to the passenger so that the passenger gains the perception of looking out of a real window, or rather, out of the airborne vehicle as if the display would be a transparent part of the hull of the airborne vehicle.

Such a virtual window assembly has several advantages: The usually small aircraft windows may be virtually enhanced in size so that passengers may have a sensation of enhanced sight to the outside. Therefore, the comfort of the passengers may be increased. Weight, aircraft drag, manufacturing costs and/or maintenance efforts associated with the design of physical aircraft windows may be decreased since aircraft windows may be kept small or even be dispensed with at all. Additional passenger seats may also be placed in fuselage sections like conical or bulk sections which usually do not easily allow for the installation of physical windows. In such sections, the passenger comfort may be upheld by providing the same virtual panoramic view to the outside as in other fuselage sections with actual physical windows.

According to an embodiment of the virtual window assembly, the at least two cameras may each comprise an ultra wide-angle lens camera. In one embodiment, the cameras may have an angle of view of approximately 180°. It may be possible to employ at least four such ultra wide-angle lens cameras, two for each side of the airborne vehicle.

According to another embodiment of the virtual window assembly, the automultiscopic electronic display may be mounted along the side walls of the hull. Optionally and/or additionally, an automultiscopic electronic display may be mounted with a viewing direction against the flying direction of the airborne vehicle. The side wall display serves as a virtual side window allowing a view to the side of the airborne vehicle, while the front wall display may serve as virtual front window allowing a view in flying direction as if the front of the airborne vehicle would be transparent.

According to another embodiment of the virtual window assembly, the automultiscopic electronic display may be configured to display image data using one of lenticular lens technology, parallax barrier technology, volumetric display technology, holographic technology and light field display technology.

According to another embodiment of the virtual window assembly, the image data processor may be integrated into a display module of one of the automultiscopic electronic display. Decentralized image processing provides the advantage of less load on the aircraft data network due to heavy network traffic from the large quantities of image data to be transmitted and processed.

According to an embodiment of the aircraft, the image data processor may be integrated into a flight attendant control panel of the aircraft. Existing computing power in the flight attendant control panel may advantageously be used in processing the image data. Moreover, the integration with the flight attendant control panel allows for a modular and more flexible implementation of the virtual window assembly in the aircraft.

According to an embodiment of the aircraft, the virtual window assembly may comprise a plurality of automultiscopic electronic displays which may be coupled to the image data processor in a daisy-chain network topology. Dairy chain wirings have the advantage of requiring less cable bundling and less routing length, thereby reducing the overall system weight while at the same time allowing for better synchronicity between the displays and reducing latency issues.

According to a further embodiment of the aircraft, the aircraft may further comprise at least one window formed in the fuselage of the aircraft, and an opaque window cover installed in the window with the at least one camera being arranged in a throughhole of the window cover. That way, for the display associated with the window in which the camera is installed, the computational effort needed to process and re-calculate the image data for that particular window is saved since the captured image data from the camera already corresponds to the view through that window. Specifically for Ultra HD resolution image data, this reduced effort amounts to a substantial decrease in computational power needed.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates an exemplary part of a fuselage of an aircraft.
Fig. 2 schematically illustrates a virtual window assembly according to an embodiment of the invention.
Fig. 3 schematically illustrates an aircraft having a virtual window assembly according to another embodiment of the invention.
Fig. 4 schematically illustrates image capturing sectors of a camera for a virtual window assembly according to another embodiment of the invention.
Fig. 5 schematically illustrates a processing environment for an aircraft having a virtual window assembly according to another embodiment of the invention.
Fig. 6 schematically illustrates stages of a method for displaying a view of the outside of an aircraft to passengers within the aircraft according to another embodiment of the invention.
Fig. 7 schematically illustrates an automultiscopic electronic display for a virtual window assembly according to another embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Electronic displays within the meaning of the present invention comprise any electronically controlled display device which is capable of optically conveying variable information to an onlooker. Electronic displays may for example include LED displays, OLED displays, LCD displays or similar.

Autostereoscopic displays are employing multi-layered electronic displays with one or more co-planarly arranged LED, OLED or LCD panels. They use special light directing devices to create separate viewing windows in the user's space, which allow the user to see 3D images without glasses. Since the designated viewing windows form a viewing space that is significantly larger than the size of the human eye, users can move their heads freely as long as their eyes are within the viewing space. Automultiscopic displays are multi-view autostereoscopic displays, i.e. autostereoscopic displays that allow separate viewing windows in the user's space from a multitude of different viewing positions in front of the display. Each of the multitude of different viewing positions may correspond to one of a multitude of autostereoscopic display views that are associated with the respective viewing angle corresponding to the angle which the respective viewing positions forms with the plane normal vector of the automultiscopic display.

Automultiscopic displays are a type of 3D display that provide an unencumbered view on a three-dimensionally imaged projection, meaning that many images are displayed at once in a manner that the viewer is may be allowed to gain the perception of being able to look around an object when moving his head in front of the display. This advantageously portrays a more accurate display of real world images. Automultiscopic displays may use one of several stereoscopic display techniques that are used to produce the viewing windows. Such techniques may for example include lenticular lens technology, parallax barrier technology, volumetric display technology, holographic technology and light field display technology.

For example, parallax barrier displays use a front array of pinholes and a light producing panel behind the array of pinholes so that light from the back panel is selectively blocked with adaptive and angularly resolved apertures to produce viewing windows. Thereby, the resolution of the original display is divided by the number of viewing windows such that to display n views, the resolution of the individual view becomes 1/n of the original display resolution. Lenticular lens displays use an array of magnifying lenses which magnify different images depending on the viewing angle at which the display is looked at.

Another possibility is to use content-adaptive parallax barriers which are configured to actively optimize the spacing and orientation of apertures depending on the three-dimensional image currently being projected. In such a manner, the brightness of the perceived images may be advantageously increased due to the elimination of a fixed heuristic aperture geometry.

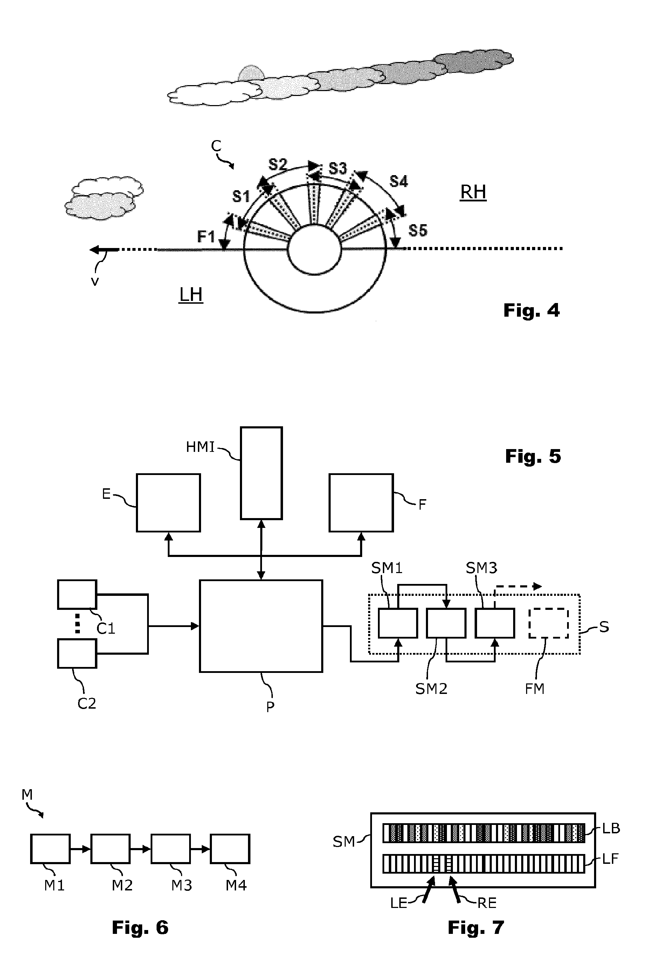

Fig. 7 exemplarily depicts a schematic illustration of an automultiscopic electronic display SM that is based on content-adaptive parallax barrier technology. The automultiscopic electronic display SM generally includes a pair of LCD panels of which a back panel LB is co-planarly stacked behind a front panel LF. A left eye view LE and a right eye view RE of an onlooker are selectively blocked by an actively adaptive aperture array of the front panel LF, depending on the light modulation at the back panel LB. That way, different image data associated with the respective viewing angle and position of the onlooker in front of the display SM may be presented, thereby creating the perception of being able to see three-dimensional scenery, i.e. creating the illusion of depth on a quasi-two-dimensional display system by providing binocular depth cues via presenting different images to each eye of a viewer. Adaptive masking selection for the light modulators of the front panel LF further optimizes each multi-view image for brightness and frame rate compared to conventional parallax barriers and allows a user to tilt his head in front of the display SM to gain a three-dimensional impression of the images presented.

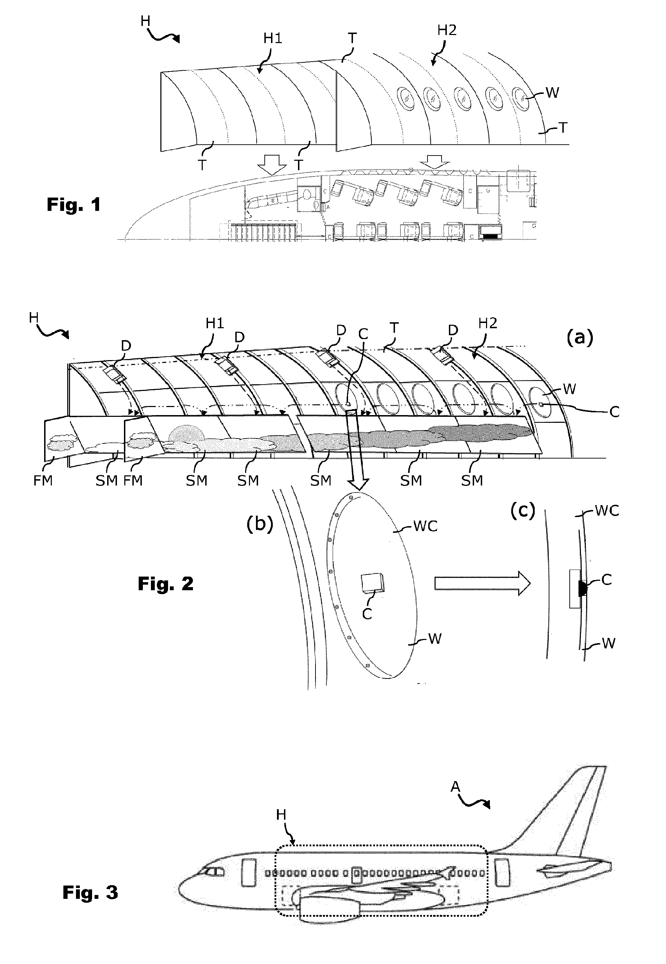

Fig. 1 shows a schematic illustration of a portion H of a fuselage of an airborne vehicle as it may be for example be employed in the fore of an aircraft, particularly a passenger aircraft. Fig. 3 exemplarily depicts an aircraft A comprising such a fuselage H as explained and described in conjunction with Figs. 1 and 2. Of course, other airborne vehicles such as helicopters, zeppelins or spaceships may be used with the virtual window assembly of the invention as well.

The fuselage H of an airborne vehicle may have different section H1, H2 which may be made by fuselage panels T. Some sections, as for example the section H1, may not have any physical windows installed in the panels T, while other sections, as for example the section H2, may have physical windows W installed in the panels T. Windowless sections H1 may for example be commonly found in conical or bulk sections in which the installation of windows is regularly complicated and expensive. Such windowless sections H1 may be interesting for airlines to implement with additional passenger seats, however, passengers' comfort and acceptance is highly impacted by the possibility to get a view of outside the aircraft.

As exemplarily illustrated in Fig. 2(a), both windowless sections H1 and sections H2 with windows W may be equipped with a virtual window assembly. The virtual window assembly includes at least one camera C that is configured to capture a panoramic and time-resolved image data stream from the view to the outside of the aircraft. The camera C may for example - as shown in Fig. 2(b) - be integrated into at least one window W which is formed in the fuselage H of the aircraft. The window W may be covered with an opaque window cover WC, for example an aluminium disc, that is installed in the window W. The camera C is then arranged in a throughhole of the window cover WC, as can be best seen in the side view of Fig. 2(c).

Two of those cameras C may then capture an outside view as panoramic image data streams from different viewing angles and transmit the captured images to an image data processor within the airborne vehicle. The image data processor receives the captured image data stream and interleaves the received image data streams to obtain an automultiscopic image data stream corresponding to the different viewing angles of the cameras. The automultiscopic image data stream therefore comprises multi-view image data associated with different viewing angles of the panoramic image data stream so that the multi-view image data may be used to create a three-dimensional impression of the respective outside view. The automultiscopic image data stream may be transmitted to one or more automultiscopic electronic displays SM which are mounted to an inside of the fuselage or hull H of the airborne vehicle.

Each of the automultiscopic electronic displays SM is configured to display either the same automultiscopic image data stream or a specifically interleaved automultiscopic image data stream depending on the physical location of the respective automultiscopic electronic displays SM in the airborne vehicle, i.e. the physical mounting location of the automultiscopic electronic displays SM in the airborne vehicle corresponds to the associated camera viewing angles in the interleaved automultiscopic image data streams. This facilitates a replacement of an optical view through physical aircraft windows W with a realistic and three-dimensional panorama view to the outside of the aircraft cabin by a digital display of images on the electronic displays. Moreover, the digital view may even be extended to windowless fuselage sections H1 which would normally not allow a view to the outside of the aircraft.

It may for example be possible to mount a multitude of automultiscopic electronic displays SM side-by-side in a horizontal line along the extension of the fuselage, i.e. the electronic displays SM may be arranged similarly to the physical windows W themselves mounted along the side walls of the fuselage H in order to create the illusion that the displays are actually windows. There may for example be side view virtual window displays that create a three-dimensional panorama view. The field and side viewing angle may be similar to that of an aircraft window for all passengers over all displays. Additionally, there may be the option to provide front-side displays FM which are mounted with a viewing direction against the flying direction of the aircraft A, i.e. displays for a straight-on viewing direction in the direction of flight of the aircraft. Those front-side displays FM create the illusion for the passenger to be able to have unobstructed three-dimensional view through the cockpit to the surroundings in front of the aircraft.

The automultiscopic electronic displays SM may each configured to display image data in Ultra HD 4K or Ultra HD 8K, i.e. displays that have an aspect ratio of 16:9 and at least one digital input capable of carrying and presenting native video at a minimum resolution of 3840x2160 pixels. Specifically, Ultra HD 4K is a video format allowing a resolution of 3840 pixels wide by 2160 pixels tall, and Ultra HD 8K is a video format allowing a resolution of 7680 pixels wide by 4320 pixels tall.

The image data stream from the cameras C may for example be captured using fisheye lens cameras, i.e. a cameras with an ultra wide-angle lens that produces strong visual distortion intended to create a wide panoramic or hemispherical image. Such fisheye lens cameras may for example have an angle of view of approximately 180°. Current camera technology allows for a chip sensor resolution of Ultra HD 4K or Ultra HD 8K over a viewing angle of 360°. If one ultra wide-angle lens camera C with a viewing angle of about 180° is employed for each side of the aircraft fuselage H, the resolution will be approximately half of the chip sensor resolution. The image data processor may include software that re-calculates image pixel duplicating to control automultiscopic electronic displays with Ultra HD 4K technology.

The panorama view lens of one of the cameras C is divided into different viewing areas, as exemplarily depicted in Fig. 4 for the right hand side RH of an aircraft. Such viewing areas may correspond to certain sensor regions of the camera chip sensor. By selectively reading out captured image data in dedicated sensor regions, image data streams of associated viewing areas may be obtained. The flight direction is indicated with the reference sign "v". Of course, for the left hand side LH, the viewing areas are formed analogously. Each of those viewing areas corresponds to a viewing angle on a viewing section of the scenery outside the airborne vehicle and forms the source of an image data stream as part of a three-dimensional view.

Image data streams from different cameras capturing image data of the same viewing section of the scenery outside the airborne vehicle, but from a different viewing angle may be transmitted to the image data processor for further processing and calculations. Particularly, the calculations involve interleaving the image data streams from the different cameras to obtain an automultiscopic image data stream. This calculation may be performed by software, firmware and/or hardware in the image data processor. The real-time interleaving may be processed in a frame buffer of the image data processor.

Crucial aspects that have to be considered in order to provide for real-time image performance are system latency and distribution of image data calculation tasks. Thus, it may be useful to provide a modular system that is expandable in a cascade. To that end, the image data distribution may be made in a daisy-chain arrangement of the automultiscopic electronic displays. Such a system may reduce the customizing effort for each aircraft and may be made available as a retrofit, line fit and stand-alone system. Moreover, a daisy-chain network topology may reduce the quantity of cable bundles and effort needed for routing.

In order to tackle system latency problems, image data may be transmitted directly and without coding, compression and/or packaging. It may be useful to provide for specific data distribution units D throughout the aircraft cabin which are interfaced with the displays via for example Ethernet, HDMI, Display Port or other video suitable interfaces. The data distribution units D may for example be part of an already existing cabin management system within the aircraft that is initially configured to transmit and distribute digital data information for cabin management functions through the aircraft cabin. Such a cabin management system may already provide for a high speed backbone data bus that is required to distribute the large amounts of image data of the virtual window assembly.

In the illustrated example of Fig. 2(c) the ultra wide-angle lens cameras C may be mounted in cut-outs of the aircraft windows W that are filled with suitable aluminum covers WC which may be similar in construction to the outside wall of the aircraft. The cameras C are then installed in the cut-out window covers WC so that the camera objective with a viewing angle of about 180° is mounted in the cut-out cover in a small hole of less than 5 mm diameter. It may be possible to use a camera C for each aircraft window W and one of the automultiscopic electronic displays may be installed in front of those windows. The captured image data stream may then be transmitted directly to the associated display. The decoding, re-calculating, processing and image stream interleaving for the associated electronic display may in this case be performed decentralized, i.e. with a local image data processor installed within a display module of the automultiscopic electronic display. Additionally, the display module may be connected to data distribution units D of the system so that further data for video functions, like for example viewing selection, Picture in Picture, rendered landscape simulation and/or augmented reality from and to a central data distribution module in the network may be transmitted and/or received. The neighbouring automultiscopic electronic displays may additionally be connected in daisy-chain topology to exchange the image data streams of the different cameras. Furthermore, the automultiscopic electronic displays may have touchscreen functionality so that a passenger touching on parts of the electronic display may exert an influence on what is displayed, for example additional OSD information, brightness settings, contrast settings or similar.

Fig. 5 depicts a block diagram of a processing environment on board of an airborne vehicle that comprises a virtual window assembly. The processing environment may be employed for a virtual window assembly as shown and explained in conjunction with Figs. 1 to 3 and may be installed in an aircraft A as shown in Fig. 4.

One or more cameras C, like ultra wide-angle or fisheye lens cameras C that are used to capture panoramic and time-resolved image data streams of the outside of the aircraft are coupled to an image data processor P. The image data processor P may be a stand-alone system or alternatively be integrated into another processing unit of the aircraft, for example a flight attendant control panel of the aircraft. An electronic display system S including at least one automultiscopic electronic display SM is coupled to the image data processor P. In case more than one automultiscopic electronic display SM is used in the electronic display system S, the system S may be coupled to the image data processor P for example in a daisy-chain network topology. Of course, the electronic display system S may also be connected to the image data processor P in another network topology, for example in a cloud network or a star network. Particularly, the electronic display system S may employ automultiscopic electronic displays SM that are based on one of lenticular lens technology, parallax barrier technology, volumetric display technology, holographic technology and light field display technology. For example, one explicit implementation for the automultiscopic electronic display(s) SM may involve content-adaptive parallax barrier technology as exemplarily illustrated in conjunction with Fig. 7.

The image data processor P may be embedded or otherwise integrated into existing aircraft cabin networks that may, inter alia, comprise In-flight entertainment (IFE) modules E, cabin management modules F and/or human-machine interfaces HMI. For example, the existing aircraft cabin network may be a cabin intercommunication data system (CIDS). The image data processor P may be equipped with a graphic processor having high-speed performance. Additionally, the image data processor P may be equipped with server functionality that may be a stand-alone server blade or be integrated into a HMI control panel of the aircraft network.

Fig. 6 schematically illustrates stages of a method M for displaying a view of the outside of an aircraft A to passengers within the aircraft A. The method M may for example be used in an aircraft A as shown in Fig. 3 and may make use of a virtual window assembly as explained in conjunction with the Figs. 1, 2, 4 and 7. The method M may be performed in a processing environment as exemplarily depicted in Fig. 5.

In a first stage M1, the method M involves capturing a panoramic and time-resolved image data stream from the view to the outside of the aircraft using at least two cameras. The cameras may for example be ultra wide-angle lens cameras having an angle of view of approximately 180°. The cameras may be installed at different positions at or near the hull of an airborne vehicle so that the two cameras each capture images from the same scenery, but from different viewing angles. In a second stage M2, the captured image data streams are transmitted to at least one image data processor P which is then able to interleave the received image data streams in a stage M3 in order to obtain an automultiscopic image data stream which corresponds to the different viewing angles of the at least two cameras. This automultiscopic image data stream may then be displayed in a stage M4 on at least one automultiscopic electronic display SM which is mounted to an inside of a hull H of the airborne vehicle. The automultiscopic electronic display SM may in particular use one of lenticular lens technology, parallax barrier technology, volumetric display technology, holographic technology and light field display technology to display the automultiscopic image data stream in stage M4 of the method M.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- A: Aircraft
- C: Camera
- C1: Camera
- C2: Camera
- D: Data distribution module
- E: In-flight entertainment (IFE) module
- F: Cabin management module
- FM: Automultiscopic electronic display
- H: Fuselage
- H1: Fuselage section
- H2: Fuselage section
- HMI: Human machine interface
- LB: Backside light modulators
- LE: Left eye view
- LF: Frontside light modulators
- LH: Left hand side
- M: Method
- M1: Method step
- M2: Method step
- M3: Method step
- M4: Method step
- P: Image data processor
- RE: Right eye view
- RH: Right hand side
- S: Virtual window display arrangement
- SM: Automultiscopic electronic display
- SM1: Automultiscopic electronic display
- SM2: Automultiscopic electronic display
- SM3: Automultiscopic electronic display
- T: Fuselage skin panels
- v: Flight direction
- W: Window
- WC: Window cover

## Claims

1. Virtual window assembly for an airborne vehicle, comprising:
at least two cameras (C1; C2), each configured to capture a panoramic and time-resolved image data stream from the view to the outside of the airborne;
at least one image data processor (P) coupled to the at least two cameras (C1; C2) and configured to receive the captured image data streams from the at least two cameras (C1; C2) and to interleave the received image data streams to obtain an automultiscopic image data stream corresponding to different viewing angles of the at least two cameras (C1; C2); and
at least one automultiscopic electronic display (SM) mounted to an inside of a hull (H) of the airborne vehicle, coupled to the image data processor (P) and configured to display the automultiscopic image data stream.

2. Virtual window assembly according to claim 1, wherein the at least two cameras (C1; C2) each comprise an ultra wide-angle lens camera having an angle of view of approximately 180°.

3. Virtual window assembly according to one of the claims 1 and 2, wherein the automultiscopic electronic display (SM) is mounted along a side wall of the hull (H).

4. Virtual window assembly according to one of the claims 1 and 2, wherein the automultiscopic electronic display (SM) is mounted with a viewing direction against the flying direction of the airborne vehicle.

5. Virtual window assembly according to one of the claims 1 to 4, wherein the automultiscopic electronic display (SM) is configured to display image data using one of lenticular lens technology, parallax barrier technology, volumetric display technology, holographic technology and light field display technology.

6. Virtual window assembly according to one of the claims 1 to 5, wherein the image data processor (P) is integrated into a display module of automultiscopic electronic display (SM).

7. Aircraft (A) comprising a virtual window assembly according to one of the claims 1 to 6.

8. Aircraft (A) according to claim 7, wherein the image data processor (P) is integrated into a flight attendant control panel of the aircraft (A).

9. Aircraft (A) according to one of the claims 7 and 8, comprising a plurality of automultiscopic electronic displays (SM) which are coupled to the image data processor (P) in a daisy-chain network topology.

10. Aircraft (A) according to one of the claims 7 to 9, comprising:
at least one window (W) formed in the fuselage (H) of the aircraft; and
an opaque window cover (WC) installed in the window (W) with the at least one of the cameras (C1; C2) being arranged in a throughhole of the window cover (WC).

11. Method (M) for displaying a view of the outside of an aircraft (A) to passengers within the aircraft (A), the method (M) comprising:
capturing (M1) a panoramic and time-resolved image data stream from the view to the outside of the aircraft using at least two cameras (C1; C2);
transmitting (M2) the captured image data streams to at least one image data processor (P);
interleaving (M3), by the at least one image data processor (P), the received image data streams to obtain an automultiscopic image data stream corresponding to different viewing angles of the at least two cameras (C1; C2); and
displaying (M4) the automultiscopic image data stream on at least one automultiscopic electronic display (SM) mounted to an inside of a hull (H) of the airborne vehicle.

12. Method (M) according to claim 11, wherein the at least two cameras (C1; C2) comprise ultra wide-angle lens cameras having an angle of view of approximately 180°.

13. Method (M) according to one of the claims 11 and 12, wherein displaying (M4) the automultiscopic image data stream comprises employing one of lenticular lens technology, parallax barrier technology, volumetric display technology, holographic technology and light field display technology.
